Europäisches Patentamt

European Patent Office

Office européen des brevets

(11) Veröffentlichungsnummer: **0 363 795**
**A2**

## (12) EUROPÄISCHE PATENTANMELDUNG

(21) Anmeldenummer: **89118381.6**

(22) Anmeldetag: **04.10.89**

(51) Int. Cl.⁵: **C08F 4/40**

Ein Antrag gemäss Regel 88 EPÜ auf Berichtigung in der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **12.10.88 DE 3834734**

(43) Veröffentlichungstag der Anmeldung:
**18.04.90 Patentblatt 90/16**

(84) Benannte Vertragsstaaten:
**BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Heider, Lothar, Dr.**
**Wolframstrasse 13**
**D-6700 Ludwigshafen(DE)**
Erfinder: **Storck, Gerhard, Dr.**
**Maxdorfer Strasse 53**
**D-6700 Ludwigshafen(DE)**
Erfinder: **Weintz, Hans-Joachim, Dr.**
**Schafweide 7**
**D-6714 Weisenheim(DE)**

(54) **Verfahren zur Herstellung von Polymerisaten aus olefinisch ungesättigten Monomeren.**

(57) Herstellung von Polymerisaten aus olefinisch ungesättigten Monomeren in wäßrigem Medium mit Hilfe eines in diesem Medium löslichen radikalbildenden Initiatorsystems aus einem Oxidationsmittel, einem Reduktionsmittel und einem Eisensalz, indem man zusätzlich zu diesem eisenhaltigen Redoxinitiatorsystem ein entsprechendes Redoxinitiatorsystem verwendet, welches ein Vanadinsalz enthält sowie Absenkung des Gehaltes an olefinisch ungesättigten Restmonomeren in wäßrigen Polymermischungen oder -lösungen nach diesem Verfahren.

EP 0 363 795 A2

## Verfahren zur Herstellung von Polymerisaten aus olefinisch ungesättigten Monomeren

Die vorliegende Erfindung betrifft ein neues Verfahren zur Herstellung von Polymerisaten aus olefinisch ungesättigten Monomeren in wäßrigem Medium mit Hilfe eines in diesem Medium löslichen radikalbildenden Initiatorsystems aus einem Oxidationsmittel, einem Reduktionsmittel und einem Eisensalz.

Polymerisationen olefinisch ungesättigter Monomeren in wäßrigem Medium mit Hilfe von radikalbildenden Initiatoren sind vielfach beschrieben. Aus der deutschen Patentschrift DE-A 848 258 ist bekannt, daß bei Anwendung peroxidischer Initiatoren, die im allgemeinen durch thermischen Zerfall Radikale bilden, die Polymerisation durch Zusatz von Reduktionsmitteln erleichtert werden kann. Die Anwendung derartiger Initiatorsysteme mit erhöhter Wirksamkeit bietet den Vorteil, daß man bei vorgegebener Reaktionstemperatur die Polymerisationsgeschwindigkeit erhöhen oder mit derselben Polymerisationsgeschwindigkeit bei tieferen Temperaturen arbeiten kann. Letzteres führt im allgemeinen zu einheitlicheren Polymerisaten, was aus anwendungstechnischen Gründen meist angestrebt wird.

Aus der oben genannten Patentschrift ist außerdem bekannt, daß bei Polymerisationen olefinisch ungesättigter Monomeren mit Hilfe solcher aus einem Oxidationsmittel und einem Reduktionsmittel bestehenden Redoxinitiatorsysteme das Initiatorsystem durch Zugabe geringer Mengen einer im Reaktionsmedium löslichen Metallverbindung, deren metallische Komponente in mehreren Wertigkeitsstufen auftreten kann, aktiviert und damit die Polymerisation zusätzlich erleichert werden kann.

Für Polymerisationen olefinisch ungesättigter Monomeren in wäßrigen Polymerisationsmedien sind aus der GB-A 607 735 für den pH-Bereich von 1 bis 13 verschiedene Peroxid und Reduktionsmittel enthaltende Redoxinitiatorsysteme bekannt, die als die Polymerisation zusätzlich erleichternde Metallverbindungen Eisen- oder Vanadinsalze enthalten.

Wie bei jeder technischen Polymerisation verbleiben jedoch die Bestandteile dieser Initiatorsysteme in freier Form, unverändert oder chemisch abgewandelt, oder chemisch gebunden im Polymerisat oder dessen Lösung oder Dispersion. Obwohl es sich im allgemeinen nur um geringe Mengen handelt, ist dieser Sachverhalt besonders im Hinblick auf die Metallsalze meist unerwünscht, sei es, daß dadurch die Eigenschaften der Polymerisate beeinträchtigt werden oder die Polymerisate den Reinheitsanforderungen nicht genügen.

Der vorliegenden Erfindung lag daher die Bereitstellung eines neuen Verfahrens zur Herstellung von Polymerisaten aus olefinisch ungesättigten Monomeren in wäßrigem Medium mit Hilfe von in diesem Medium löslichen, metallisch aktivierten radikalbildenden Redoxinitiatorsystemen, die noch wirksamer sind als die durch ein Eisen- oder Vanadinsalz aktivierten Redoxinitiatorsysteme, als Aufgabe zugrunde, so daß bereits bei Anwendung geringerer Mengen des Initiatorsystems die gewünschte Wirkung erzielt werden kann.

Demgemäß wurde ein Verfahren zur Herstellung von Polymerisaten aus olefinisch ungesättigten Monomeren in wäßrigem Medium mit Hilfe eines in diesem Medium löslichen radikalbildenden Redoxinitiatorsystems aus einem Oxidationsmittel und einem Reduktionsmittel sowie einem Eisensalz gefunden, welches dadurch gekennzeichnet ist, daß man zusätzlich zu diesem eisenhaltigen Redoxinitiatorsystem ein entsprechendes Redoxinitiatorsystem verwendet, welches ein Vanadinsalz enthält.

Wird ein ein Eisen- oder ein Vanadinsalz enthaltendes Redoxinitiatorsystem allein eingesetzt, beruht die Wirkung der Metallverbindungen wohl darauf, daß die metallische Komponente unter Radikalbildung regelmäßig wiederkehrend durch das Oxidationsmittel in eine höhere (Fe(II) → Fe(III), V(II bis IV) → V(V)) und durch das Reduktionsmittel wieder in eine niedrigere Wertigkeitsstufe überführt wird, wobei im eisenhaltigen Initiatorsystem im allgemeinen die Oxidation und im vanadinhaltigen Initiatorsystem im allgemeinen die Reduktion der langsamste Schritt ist.

Bei einer gemeinsamen Anwendung eines ein Eisensalz enthaltenden Redoxinitiatorsystems und eines ein Vanadinsalz enthaltenden Redoxinitiatorsystems werden vermutlich die geschwindigkeitsbestimmenden Schritte der Einzelsysteme durch eine schnelle Redoxreaktion zwischen Fe(II) und V(V) umlaufen. Auf jeden Fall entsteht ein Gesamtredoxinitiatorsystem von erhöhter Wirksamkeit, dessen bei gegebener Temperatur pro Zeiteinheit gebildete Anzahl an Radikalen, unter sonst gleichen Voraussetzungen, größer ist als die Summe der von den beiden Einzelredoxinitiatorsystemen im Fall ihrer getrennten Anwendung pro Zeiteinheit gebildeten Anzahl an Radikalen.

Für das erfindungsgemäße Verfahren sind insbesondere solche ein Eisen- oder ein Vanadinsalz enthaltende Redoxinitiatorsysteme geeignet, die unter den jeweiligen Polymerisationsbedingungen bereits bei alleiniger Anwendung eine gute Wirksamkeit besitzen. Sie können für zahlreiche Polymerisationen der Fachliteratur (z.B. GB-A 607 735 oder Houben-Weyl, Methoden der organischen Chemie, Bd. XIV/1, E. Müller (Hrsg.), Georg-Thieme-Verlag Stuttgart, 4. Auflage (1961), S. 281ff) entnommen werden. Für die radikalische Homopolymerisation von Vinylacetat in wäßriger Lösung bei pH 1 bis 5 ist beispielsweise ein Gesamtredoxinitiatorsystem aus Ammoniumpersulfat, Ascorbinsäure und Eisen(II)sulfat einerseits sowie Wasserstoffperoxid, dem Natriumsalz der Hydroxymethansulfinsäure und Vandyl(IV)sulfat-Pentahydrat (VOSO$_4$ • 5H$_2$O) andererseits besonders geeignet.

Wesentliche Voraussetzung für eine hohe Wirksamkeit der für das erfindungsgemäße Polymerisationsverfahren eingesetzten Gesamtredoxinitiatorsysteme ist jedoch nur, daß diese ein Reduktionsmittel, welches unter den Polymerisationsbedingungen Fe(III) mit hoher Geschwindigkeit in Fe(II) überführt, sowie ein Oxidationsmittel, welches unter den Polymerisationsbedingungen die niederen Wertigkeitsstufen des Vanadins mit hoher Geschwindigkeit in V(V) überführt, enthalten, und mindestens einer dieser beiden Teilschritte unter Radikalbildung erfolgt. Ob diese Voraussetzungen erfüllt werden, kann ohne Schwierigkeiten ermittelt werden, in dem man einerseits versucht unter den Polymerisationsbedingungen Fe(III) zu Fe(II) zu reduzieren und ·V (II bis IV) zu V(V) zu oxidieren und andererseits die Polymerisation nur über den entsprechenden Teilschritt auszulösen.

Während die Reduktion des Fe(III) im allgemeinen nicht unter Radikalbildung durchführbar ist, haben sich zur Oxidation des V(II bis IV) unter Radikalbildung folgende Oxidationsmittel als besonders wirksam erwiesen: Peroxyverbindungen wie Acylperoxide, z.B. Benzoylperoxid, sowie Hydroperoxide wie Wasserstoffperoxid und besonders bevorzugt tert.-Butylhydroperoxid und Cumolhydroperoxid. Ferner sind zur Oxidation der niedrigen Wertigkeitsstufen des Vanadins unter Radikalbildung Sauerstoff abgebende Mittel ohne Peroxidstruktur wie Alkalimetallchlorate und -perchlorate, Übergangsmetalloxidverbindungen wie Kaliumpermanganat, Mangandioxid und Bleidioxid, aber auch Bleitetraacetat und Jodbenzol geeignet.

Besonders wirksame Mittel zur Reduktion des Fe(III) sind Sulfinsäuren, z.B. Alkylsulfinsäuren wie iso-Propylsulfinsäure, Arylsulfinsäuren wie Phenylsulfinsäure oder Hydroxyalkylsulfinsäuren wie Hydroxymethansulfinsäure sowie die Alkalimetallsalze dieser Säuren, reduzierende Zucker wie Lactose und Fructose sowie Derivate derselben wie Ascorbinsäure.

Es wurde weiterhin gefunden, daß die genannten Oxidationsmittel im allgemeinen auch als Oxidationsmittel für Fe(II) und die genannten Reduktionsmittel häufig auch als Reduktionsmittel für wirksam sind, wobei die Reduktion des V(V) im Unterschied zur Reduktion des Fe(III) im allgemeinen unter Radikalbildung erfolgt.

Besonders vorteilhaft ist im allgemeinen die Verwendung von Gesamtredoxinitiatorsystemen, die neben einem Eisensalz und einem Vanadinsalz nur jeweils eines der genannten Oxidationsmittel und Reduktionsmittel enthalten.

Als Oxidationsmittel für Fe(II) können zusätzlich Peroxidischwefelsäure und deren Alkalimetall- oder Ammoniumsalze eingesetzt werden, während als Reduktionsmittel für V(V) zusätzlich Alkanole wie Ethanol, Ketone wie Aceton oder Cyclohexanon, Aldehyde wie Acetaldehyd, Carbonsäuren wie Essigsäure, Hydroxycarbonsäuren wie Hydroxyessigsäure und Citronensäure, Ketocarbonsäuren wie Brenztraubensäure sowie bevorzugt Polyhydroxycarbonsäuren wie Weinsäure, aliphatische Dialdehyde wie Glyoxal, Amine wie Diethylamin oder Anilin sowie Mercaptane wie tert.-Dodecylmercaptan geeignet sind. Im allgemeinen sind die genannten Oxidations- und Reduktionsmittel sowohl in saurem als auch. in neutralem und alkalischem Medium wirksam.

Als Vanadin- und Eisensalze können alle diejenigen verwendet werden, die im wäßrigen Reaktionsmedium in ausreichender Weise löslich sind. Mit Vorteil werden Eisen(II)sulfat, Eisen(II)chlorid, Eisen(II)nitrat, Eisen(II)acetat sowie die entsprechenden Eisen(III)salze, Ammonium- oder Alkalimetallvanadate (V(V)), Vanadium(III)chlorid, Vanadyl(V)trichlorid und insbesondere Vanadyl(IV)sulfat-Pentahydrat (VOSO$_4$ • 5H$_2$O) eingesetzt. Allgemein ist darauf zu achten, daß die metallischen Komponenten durch bei der Polymerisation zugesetzte Hilfsmittel wie Basen, Säuren, Puffersubstanzen, Salze usw. nicht ausgefällt werden. Man setzt in solchen Fällen Komplexbildner zu, die die Metalle unter den Reaktionsbedingungen in Lösung halten. Beispiele für geeignete Komplexbildner sind die Alkalimetallsalze der Weinsäure, Citronensäure, Pyrophosporsäure und Ethylendiamintetraessigsäure. Vorteilhaft werden Komplexbildner verwendet, die auch als Reduktionsmittel geeignet sind, z.B. Weinsäure.

Das Mengenverhältnis von Oxidationsmitteln zu Reduktionsmitteln ist für die beiden das Gesamtredoxinitiatorsystem bildenden Einzelredoxinitratorsysteme, von denen das eine ein im Reaktionsmedium lösliches Eisensalz und das andere ein im Reaktionsmedium lösliches Vanadinsalz enthält, in weiten Grenzen variabel. Man kann jeweils sowohl die Oxidationsmittel als auch die Reduktionsmittel im Überschuß verwenden. Bevorzugt werden sie in äquivalenten Mengen eingesetzt. Hingegen ist es zweckmäßig, von der Metallverbindung nicht mehr zuzusetzen, als zum Erreichen der optimalen Wirkung notwendig ist. Dies ist meist bei einer Menge, die 0,01 bis 1 Gew.% des Oxidationsmittels oder Reduktionsmittels beträgt, der Fall. Das Atomverhältnis von Eisen zu Vanadin ist ebenfalls in weiten Grenzen variabel. Eine erkennbare synergistische Wirkung wird jedoch im allgemeinen nur bei einem Atomverhältnis Fe:V von 1000:1 bis

3

1:1000 beobachtet. Normalerweise werden beide Metalle in einem Verhältnis von 100:1 bis 1:100, bevorzugt 10:1 bis 1:10, eingesetzt, wobei ein Verhältnis von 1:1 besonders bevorzugt wird.

Die vorzugsweise angewandten Mengen an Oxidations- bzw. Reduktionsmitteln betragen im allgemeinen 0,1 bis 1 Gew.% der Menge der zu polymerisierenden Monomeren. Die Zugabe der verschiedenen Bestandteile des Gesamtredoxinitiatorsystems erfolgt zweckmäßigerweise voneinander getrennt und kann je nach Bedarf bei Beginn der Polymerisation, oder während ihres Verlaufes vorgenommen werden. Die Zugabe erfolgt vorteilhaft in Form wäßriger Lösungen.

Die synergetische Wirkungsweise zwischen einem ein Eisensalz enthaltenden Redoxinitiatorsystem und einem ein Vanadinsalz enthaltenden Redoxinitiatorsystem tritt sowohl in saurem als auch in neutralem und alkalischem Medium auf. Bevorzugt ist der pH-Bereich von 1 bis 12, besonders bevorzugt der Bereich von pH 2 bis pH 7. Häufig wird der pH-Wert des Polymerisationsmediums durch die Zusammensetzung der Monomerenmischung oder durch die zugesetzten Reduktionsmittel bestimmt. Er kann aber auch durch Zugabe geringer Mengen an organischen oder anorganischen Säuren wie Essigsäure, Ascorbinsäure, Salzsäure, Schwefelsäure oder Phosphorsäure sowie Basen wie Ammoniak, organische Amine oder Alkalimetallhydroxide, gegebenenfalls durch Puffersysteme unterstützt, in den gewünschten Bereich verschoben werden.

Neben Wasser kann das Polymerisationsmedium in Mengen bis zu 95 Gew.% mit Wasser mischbare Flüssigkeiten, die gleichzeitig Reduktionsmittel sein können, z.B. niedere Alkohole, wie Methanol oder Ethanol enthalten.

Von untergeordnetem Einfluß ist die Polymerisationstemperatur. Sie wird im wesentlichen durch den Gefrier- und Siedepunkt des Reaktionsmediums begrenzt und liegt im allgemeinen zwischen 0 und 100 °C.

Wie bei radikalischen Polymerisationen üblich, wird unter Ausschluß von Luftsauerstoff gearbeitet. Als ungesättigte Verbindungen, deren radikalische Polymerisation nach dem beanspruchten Verfahren angeregt werden kann, sind besonders geeignet: $C_2$ bis $C_{10}$-Alkene, bevorzugt Ethylen und Iso buten, 4 bis 9 C-Atome enthaltende konjugierte Diene, bevorzugt Butadien, 3 bis 5 C-Atome enthaltende $\alpha,\beta$-monoethylenisch ungesättigte Monocarbonsäuren sowie deren Ester eines $C_1$ bis $C_{12}$-Alkanols, bevorzugt Acrylsäure und Methacrylsäure sowie Methyl-, Ethyl-, n- und tert.-Butyl- und Ethylhexylacrylat bzw. -methacrylat, 4 bis 5 C-Atome enthaltende monoethylenisch ungesättigte Dicarbonsäuren sowie deren Halb- und Vollester von $C_1$- bis $C_{12}$-Alkanolen, bevorzugt Fumarsäure, Maleinsäure und Itaconsäure, Vinylester einer $C_1$- bis $C_{12}$-Alkansäure, bevorzugt Vinylacetat und Vinylpropionat, Vinylaromaten wie Styrol oder Divinylbenzol sowie Vinylchlorid, Vinylidenchlorid und Acrylnitril. Die erfindungsgemäße Arbeitsweise ist auch auf Mischpolymerisationen sowie in Anwesenheit von Reglern, z.B. Mercaptanen wie Dodecylmercaptan, anwendbar.

Besonders vorteilhaft ist die neue Arbeitsweise zur Durchführung radikalischer Emulsionspolymerisationen in wäßrigem Medium in allgemein bekannter Weise geeignet. Die Auswahl der Emulgiermittel richtet sich danach, ob man in alkalischem, neutralem oder saurem Medium arbeitet. Für das alkalische Medium seien insbesondere die Natriumsalze von Alkylsulfaten wie Natrium-n-dodecylsulfat oder Natrium-n-dodecylbenzolsulfonat und für das neutrale und saure Medium besonders ethoxylierte Alkylphenole (EO-Grad: 3 bis 30, Alkylrest $C_8$-$C_{10}$) und/oder ethoxylierte Fettalkohole (EO-Grad 5 bis 50, Alkylrest $C_8$-$C_{23}$) sowie ethoxylierte Alkylphenole die zusätzlich sulfatiert sind (EO-Grad 5 bis 50, Alkylrest $C_8$-$C_{10}$) genannt.

Über seine Anwendung zur Durchführung einer Hauptpolymerisation hinaus ist das erfindungsgemäße Polymerisationsverfahren in vorteilhafter Weise geeignet, um als Nachpolymerisationsverfahren in sauren oder alkalischen wäßrigen Polymermischungen oder -lösungen den Restgehalt an olefinisch ungesättigten Monomeren zu reduzieren. Unerwünschte Restmengen an Monomeren treten häufig auf, da es meist unwirtschaftlich ist, unter Aufrechterhaltung der eigentlichen Polymerisationsbedingungen einen vollständigen Umsatz der Hauptpolymerisation anzustreben.

Durch Zugabe geringer Mengen eines erfindungsgemäßen Gesamtredoxinitiatorsystems, bezogen auf die Gesamtmenge der olefinisch ungesättigten Restmonomeren im al gemeinen 0, 1 bis 10 Gew.%, können diese Restmonomeren auch bei tiefen Temperaturen, z.B. im Lagertank, in effektiver Weise zur Nachpolymerisation angeregt und damit reduziert werden, ohne daß die Wirtschaftlichkeit des Hauptpolymerisationsverfahrens oder die Produktqualität wesentlich beeinträchtigt werden. Letzteres trifft insbesondere dann zu, wenn entsprechend funktionalisierte Restmonomere wie Acrylsäure und Maleinsäure oder nach der Hauptpolymerisation noch vorhandene Regler wie tert.-Dodecylmercaptan die Funktion des Reduktionsmittels übernehmen können. Besonders vorteilhaft wird das erfindungsgemäße Verfahren zur Nachpolymerisation in wäßrigen Kunststoffdispersionen, deren pH-Wert bevorzugt 1 bis 12 beträgt, eingesetzt.

Beispiele 1 bis 3 und Vergleichsbeispiele V1 bis V6

Die Geschwindigkeit der radikalischen Emulsionspolymerisation von Vinylacetat in Abhängigkeit vom verwendeten Initiatorsystem

In einer Lösung von 4 g des Na-Salzes der n-Dodecylsulfonsäure und 0,04 g des Na-Salzes der Ethylendiamintetraessigsäure in 750 g Wasser wurden 200 g Vinylacetat emulgiert und anschließend auf die Polymerisationstemperatur von 40°C erhitzt sowie nach Zugabe der in Tabelle 1 aufgeführten Initiatorsysteme unter Schutzgas ($N_2$) polymerisiert.

Die Zugabe des Reduktionsmittels, der Salze und des Oxidationsmittels erfolgte in dieser Reihenfolge voneinander getrennt, jeweils in 10 g Wasser gelöst. Nach beendeter Zugabe des Reduktionsmittels wurde der pH-Wert des Polymerisationsmediums durch Zugabe geringer Mengen Schwefelsäure stets auf pH 3 eingestellt. Die nach 0,5 sowie 1 h erreichten Umsätze sind ebenfalls in Tabelle 1 enthalten.

Tabelle 1

| Initiatorsysteme | | | | | | | | | |
|---|---|---|---|---|---|---|---|---|---|
| Zusammensetzung [g] | 1 | V1 | V2 | 2 | V3 | V4 | 3 | V5 | V6 |
| tert.-Butylhydroperoxid | 0,2 | 0,2 | 0,2 | 0,2 | 0,2 | 0,2 | 0,2 | 0,2 | 0,2 |
| Na-Salz der Hydroxymethansulfinsäure | 0,2 | 0,2 | 0,2 | - | - | - | - | - | - |
| Glyoxal | - | - | - | 0,2 | 0,2 | 0,2 | - | - | - |
| Ascorbinsäure | - | - | - | - | - | - | 0,2 | 0,2 | 0,2 |
| $FeSO_4$ | 0,001 | 0,002 | - | 0,001 | 0,002 | - | 0,001 | 0,002 | - |
| $VOSO_4 \cdot 5H_2O$ | 0,001 | - | 0,002 | 0,001 | - | 0,002 | 0,001 | - | 0,002 |
| Umsatz [%] | | | | | | | | | |
| 0,5 h | 95 | 25 | 0,5 | 56 | 0,1 | 36 | >99 | 88 | 45 |
| 1 h | >99 | 30 | 0,75 | 87 | 0,2 | 74 | >99,5 | 97 | 78 |

Beispiel 4

Reduktion des Gehaltes an Restmonomeren

Ein Monomerengemisch aus
30 g n-Butylacrylat
55 g Ethylhexylacrylat
13 g Methylmethacrylat und
2 g Maleinsäure
wurde in einer Lösung von 0,5 g Na-Salz der n-Dodecylsulfonsäure in 100 g Wasser emulgiert und nach getrennter Zufuhr von 0,6 g Natriumperoxidisulfat und 0,1 g tert.-Dodecylmercaptan bei 80°C bis zu einem Umsatz von 99,5 % 3h polymerisiert. Anschließend wurde die einen pH-Wert von 4 aufweisende Dispersion auf 25°C abgekühlt. Danach wurden voneinander getrennt und jeweils in 1 g Wasser gelöst 0,0005 g $VOSO_4 \cdot 5H_2O$, 0,0005 g $FeSO_4$, 0,05 g Na-Salz der Hydroxymethansulfinsäure, 0,05 g tert.-Butylhydroperoxid und 0,001 g des Na-Salzes der Ethylendiamintetraessigsäure zugegeben.

Eh später wurden gaschromatographisch folgende Restmonomerengehalte, bezogen auf das Gesamtgewicht der Dispersion, bestimmt:
n-Butylacrylat <20 ppm
Ethylhexylacrylat <30 ppm
Methylmethacrylat <50 ppm

**Ansprüche**

1. Verfahren zur Herstellung von Polymerisaten aus olefinisch ungesättigten Monomeren in wäßrigem Medium mit Hilfe eines in diesem Medium löslichen radikalabildenden Redoxininitiatorsystems aus einem Oxidationsmittel und einem Reduktionsmittel sowie einem Eisensalz, dadurch gekennzeichnet, daß man zusätzlich zu diesem eisenhaltigen Redoxinitiatorsystem ein entsprechendes Redoxinitiatorsystem verwendet, welches ein Vanadinsalz enthält.

2. Verfahren nach Anspruch 1, dadurch gekennzeichnet, daß als Oxidationsmittel ein Acylperoxid oder ein Hydroperoxid verwendet wird.

3. Verfahren nach den Ansprüchen 1 oder 2, dadurch gekennzeichnet, daß als Reduktionsmittel eine Sulfinsäure, das Alkalimetallsalz einer Sulfinsäure oder Ascorbinsäure verwendet wird.

4. Verfahren nach den Ansprüchen 1 bis 3, dadurch gekennzeichnet, daß als Eisensalz FeSO$_4$ und als Vanadinsalz VOSO$_4$ • 5H$_2$O verwendet wird.

5. Verfahren nach den Ansprüchen 1 bis 4, dadurch gekennzeichnet, daß das Atomverhältnis Fe : V 100 : 1 bis 1 : 100 beträgt.

6. Verfahren nach den Ansprüchen 1 bis 5, dadurch gekennzeichnet, daß der pH-Wert des Polymerisationsmediums 1 bis 12 beträgt.

7. Verfahren nach den Ansprüchen 1 bis 6, dadurch gekennzeichnet, daß die Polymerisation als Emulsionspolymerisation durchgeführt wird.

8. Verfahren zur Absenkung des Gehaltes an olefinisch ungesättigten Restmonomeren in wäßrigen Polymermischungen oder -lösungen mit Hilfe eines in diesen Mischungen oder Lösungen löslichen radikalbildenden Redoxinitiatorsystems aus einem Oxidationsmittel und einem Reduktionsmittel sowie einem Eisensalz, dadurch gekennzeichnet, daß man zusätzlich zu diesem eisenhaltigen Redoxinitiatorsystem ein entsprechendes Redoxinitiatorsystem verwendet, welches ein Vanadinsalz enthält.